# EUROPÄISCHE PATENTSCHRIFT

(11) **EP 1 994 614 B1**
(45) Veröffentlichungstag und Bekanntmachung des Hinweises auf die Patenterteilung: **20.04.2016**
(21) Anmeldenummer: 07722867.4
(22) Anmeldetag: 20.02.2007
(51) Int. Cl.: H02B 1/01

(54) **RAHMENKONSTRUKTION FÜR EINEN SCHALTSCHRANK, SCHALTSCHRANK UND BAUSATZ FÜR DEN SCHALTSCHRANK**
FRAME CONSTRUCTION FOR A SWITCHGEAR CABINET, SWITCHGEAR CABINET AND CONSTRUCTION KIT FOR THE SWITCHGEAR CABINET
CONSTRUCTION A CADRE POUR UNE ARMOIRE ELECTRIQUE, ARMOIRE ELECTRIQUE ET KIT POUR L'ARMOIRE ELECTRIQUE

(30) Priorität: 13.03.2006 DE 102006011772
(43) Veröffentlichungstag der Anmeldung: 26.11.2008
(73) Patentinhaber: Elgan Investments Inc., M5E-1 W7 Toronto, Ontario (CA)
(72) Erfinder: FISCHER, Georg, 96138 Burgebrach (DE); ENDRES, Martin, 96215 Lichtenfels (DE)
(74) Vertreter: Metzler, Volker
(86) Internationale Anmeldenummer: PCT/EP2007/001451
(87) Internationale Veröffentlichungsnummer: WO 2007/104406

(56) Entgegenhaltungen:
- WO-A-86/03265
- US-A1- 2001 050 516
- US-B2- 6 808 240

## Beschreibung

Die Erfindung betrifft eine Rahmenkonstruktion für einen Schaltschrank mit Rahmenprofilen und Verbindungselementen, wobei die Rahmenprofile über die Verbindungselemente zur Bildung der Rahmenkonstruktion miteinander verbunden und/oder verbindbar sind, wobei mindestens eines der Rahmenprofile im Querschnitt als L-Profil mit einem ersten und einem dazu L-förmig angeordneten zweiten Schenkelabschnitt ausgebildet ist und die Schenkelabschnitte zusammen einen Innensektor begrenzen, wobei der erste Schenkelabschnitt in einen zu dem Innensektor hin abgewinkelten ersten Stirnseitenabschnitt übergeht und der erste Stirnseitenabschnitt in einen zu dem ersten Schenkelabschnitt hin abgewinkelten ersten Endabschnitt übergeht und wobei der zweite Schenkelabschnitt in einen zu dem Innensektor hin abgewinkelten zweiten Stirnseitenabschnitt übergeht und der zweite Stirnseitenabschnitt in einen zu dem zweiten Schenkelabschnitt hin abgewinkelten zweiten Endabschnitt übergeht, wobei an dem ersten Stirnseitenabschnitt und in Längserstreckung des L-Profils erste Durchgangsöffnungen in einem festen Rastermaß angeordnet sind, sowie einen entsprechenden Schaltschrank und einen Bausatz für einen derartigen Schaltschrank.

Schaltschränke, insbesondere Niederspannllngsschaltschränke, werden in einer Vielzahl von Anlagen, wie z.B. in Stromversorgungen für große Einrichtungen oder bei Produktionsmaschinen, eingesetzt. Üblicherweise werden die Schaltschränke für den jeweiligen Anwendungszweck spezifisch konfektioniert. Um jedoch die Planung und Ausführung von Schaltschränken zu vereinfachen und zudem eine gewisse Modularität für Erweiterungen oder Modernisierungen der Schaltschränke zu erreichen, bestehen Schaltschränke üblicherweise aus einer Rahmenkonstruktion mit mechanischen Schnittstellen, an denen die jeweils notwendigen elektrischen Funktionsmodule befestigt werden. Typischerweise sind die Rahmenkonstruktionen mit Blenden oder Montagetüren gekapselt.

Eine derartige Rahmenkonstruktion wird beispielsweise von der Firma Lögstrup in Kvistgard, Dänemark angeboten. Komponenten dieser Rahmenkonstruktion sind im Querschnitt L-förmige, mehrfach abgewinkelte Profile, die mittels Montage-Eckelementen miteinander verschraubt werden. Die L-förmigen Profile weisen eine Vielzahl von Befestigungsöffnungen auf, die teils als Befestigungslöcher und teils als Befestigungsschlitze ausgebildet sind. Üblicherweise werden die elektrischen Funktionsmodule mittels Adapterelemente in dieser Rahmenkonstruktion befestigt.

Die WO 86/03265 zeigt eine aus Segmenten bestehende Struktur, besonders für die Herstellung von Gestellen. Diese Struktur ist von dem Typ, der eine Vielzahl von Stangen und eine Vielzahl von Verbindungen aufweist. Die Verbindungen bestehen aus einem würfelförmigen Körper, dessen mittlerer Bereich eine Kavität darstellt, der mit jeder der sechs Seiten mittels einer jeweiligen Durchgangsöffnung verbunden ist. Drei dieser Durchgangsöffnungen sind so beschaffen, dass sie den Kopf einer jeweiligen Schraube aufnehmen, deren Schaft jeweils in Gewindebohrungen der Stangen eingeschraubt ist. Wenigstens eine der übrigen Durchgangsöffnungen ist mit einem Gewinde versehen. Verbindungselemente und elastische Platten sind weiter beschrieben. Das Verbindungselement ermöglicht die Verbindung von jeweils zwei solcher aus Segmenten bestehenden Strukturen von dem beschriebenen Typ. Die elastischen Platten erlauben das Befestigen von Querstangen zwischen Paaren von Stangen.

Aus der US 6,516,955 B1 ist ein modularer Schrankrahmen bekannt. Ein solcher verbesserter Rahmen für einen Schaltschrank beinhaltet eine Vielzahl von Schienen, die miteinander durch eine Vielzahl von Verbindungselementen verbunden sind. Die Schienen sind generell von zwei unterschiedlichen querschnittsmäßigen Ausführungen, die beide mit einem einzigen Typ von Verbindungselement zusammenwirken, um es zu erlauben, dass die Schienen und die Verbindungselemente zu vielen verschiedenen Arten von Schrankrahmen konfiguriert werden können, auf die zur Bildung von Schaltschränken Platten angebracht werden können. Die Schienen und die Verbindungselemente sind modular ausgebildet und spezifisch ausgebildet, um einfach miteinander verbunden werden zu können. Während des Montierens der Verbindungselemente und der Schienen werden Bereiche einer Beschichtung der Schienen durchbrochen, wodurch die Schienen und die Verbindungselemente elektrisch leitend miteinander verbunden werden.

Der Erfindung liegt nun die Aufgabe zugrunde, eine vereinfachte Rahmenkonstruktion vorzuschlagen, die eine einfache Projektierung und Montage von Schaltschränken erlaubt. Diese Aufgabe wird gelöst durch eine Rahmenkonstruktion mit den Merkmalen des Anspruchs 1 sowie mit einem Schaltschrank oder einem Bausatz für einen Schaltschrank mit den Merkmalen des Anspruchs 17. Bevorzugte oder vorteilhafte Ausführungen ergeben sich aus den Unteransprüchen.

Die erfindungsgemäße Rahmenkonstruktion ist geeignet und/oder ausgebildet für einen Schaltschrank, insbesondere einen Niederspannungs- und/oder Mittelspannungsschaltschrank. Bevorzugt werden in dem Schaltschrank Ströme bis zu 3.000 A, insbesondere bis zu 5.000 A oder bis zu 10.000 A, und/oder Spannungen bis zu 1 kV, insbesondere bis zu 20 kV oder 30 kV geschaltet. Insbesondere werden Spannungen über 250 V und/oder Ströme über 150 A geschaltet. Vorzugsweise genügen die mit der Rahmenkonstruktion aufgebauten Schaltschränke den Prüfbedingungen nach IEC 60439-1, EN 60439-1 oder DIN EN 60439 Teil 1 in der jeweils gültigen Fassung und/oder deren entsprechenden Nachfolgebedingungen.

Die Rahmenkonstruktion weist Rahmenprofile auf, die über Verbindungselemente zur Bildung der Rahmenkonstruktion miteinander verbunden und/oder verbindbar sind. Insbesondere sind die Rahmenprofile auf die für die Rahmenkonstruktion erforderliche Länge abgelängt und/oder einbaufertig. Vorzugsweise ist die Länge der Rahmenprofile jeweils ein ganzzahlig Vielfaches des festen Rastermaßes. Bevorzugt ist die Verbindung zwischen den Rahmenprofilen und den Verbindungselementen als kraft- und/oder formschlüssige Verbindung, insbesondere Schraubverbindung ausgeführt, wobei vorzugsweise die Verbindungselemente und die Rahmenprofile zerstörungsfrei trennbar sind.

Mindestens eines der Rahmenprofile ist als L-Profil mit einem ersten und einem zweiten im Querschnitt zueinander L-förmig angeordneten Schenkelabschnitt ausgebildet, wobei der Querschnitt vorzugsweise als eine Ebene senkrecht zur Längserstreckung des L-Profils definiert ist und wobei zwischen den Schenkelabschnitten ein Innensektor definiert ist. Weiterhin im Querschnitt betrachtet geht der erste Schenkelabschnitt in einen abgewinkelten ersten Stirnseitenabschnitt über, wobei der erste Stirnseitenabschnitt zum Innensektor hin und/oder in Richtung des zweiten Schenkelabschnitts abgewinkelt, insbesondere geneigt ist. Der Stirnseitenabschnitt ist somit insbesondere in den und/oder in Richtung von den beiden Schenkelabschnitten umschlossenen Bereich abgewinkelt. Der erste Stirnseitenabschnitt geht in einen abgewinkelten ersten Endabschnitt über, wobei der erste Endabschnitt zu dem ersten Schenkelabschnitt hin und/oder in Richtung des ersten Schenkelabschnitts abgewinkelt, insbesondere geneigt ist. Erster Schenkelabschnitt, erster Stirnseitenabschnitt und erster Endabschnitt bilden insgesamt einen gemeinsamen, insbesondere U-förmigen Verlauf. An den zweiten Schenkelabschnitt schließt sich in analoger Weise ein zweiter Stirnseitenabschnitt sowie ein zweiter Endabschnitt an.

An dem ersten Stirnseitenabschnitt und in Längserstreckung des L-Profils sind erste Durchgangsöffnung vorgesehen, die in einem festen Rastermaß, also insbesondere in einem festen, gleichbleibenden Abstand angeordnet sind und insbesondere entlang einer geraden Linie aufgereiht sind.

Erfindungsgemäß ist vorgesehen, dass an dem ersten Endabschnitt und in Längserstreckung des L-Profils zweite Durchgangsöffnungen in dem gleichen festen Rastermaß angeordnet sind, also insbesondere entlang einer geraden Linie aufgereiht sind. Vorzugsweise sind die ersten und die zweiten Durchgangslöcher in der gleichen Höhe entlang der Längserstreckung des L-Profils angeordnet.

Der Erfindung liegt die Erkenntnis zu Grunde, dass mit Hilfe dieser Modifikation mechanische Schnittstellen in einer Rahmenkonstruktion geschaffen werden, die die adapterfreie und/oder adapterarme Aufnahme von elektrischen Funktionsmodulen, insbesondere von Sicherungslastschaltleisten, der wichtigsten Hersteller erlauben. Zugleich bieten die erfindungsgemäßen L-Profile eine hohe mechanische Stabilität.

Bei einer bevorzugten Weiterbildung der Erfindung sind an dem zweiten Stirnseitenabschnitt und/oder am zweiten Endabschnitt dritte und gegebenenfalls vierte Durchgangsöffnungen in Längserstreckung des L-Profils in dem festen Rastermaß angeordnet. Mit dieser Ausgestaltung weist das L-Profil eine weitere mechanische Schnittstelle auf.

Optional weist das L-Profil fünfte Durchgangsöffnungen auf, die in dem ersten bzw. zweiten Schenkelabschnitt angeordnet sind, wobei die fünften Durchgangslöcher gegenüberliegend und/oder fluchtend zu den zweiten bzw. den vierten Durchgangslöchern angeordnet sind. Weiterhin optional sind sechste Durchgangsöffnungen vorgesehen, die in dem ersten bzw. zweiten Schenkelabschnitt angeordnet sind, wobei die sechsten Durchgangslöcher gegenüberliegend und/oder fluchtend zu den dritten bzw. den ersten Durchgangslöchern angeordnet sind.

Die fünften Durchgangslöcher erlauben beispielsweise die Montage von Blenden oder Türelementen und können zusätzlich als Führung und/oder Halterung von Stiftelementen mit oder ohne Einschraubgewinden eingesetzt werden, die mit dem einen Stiftende in eine der fünften oder sechsten Durchgangsöffnungen und mit dem anderen Stiftende in eine gegenüberliegende Durchgangsöffnung eingreifen bzw. eingeschraubt werden. Diese Stiftelemente werden beispielsweise bei der Fixierung der Verbindungselemente eingesetzt. Statt Stiftelement können auch andere Befestigungselemente verwendet werden, die in insbesondere gegenüberliegende und/oder fluchtende Durchgangsöffnungen eingreifen.

Bei einer bevorzugten Ausbildung der Erfindung sind der erste und der zweite Schenkelabschnitt miteinander verbunden und im Querschnitt rechtwinklig zueinander angeordnet. Besonders vorteilhaft ist, wenn zusätzlich die Schenkelabschnitte jeweils parallel zu den zugeordneten Endabschnitten und/oder die Stirnseitenabschnitte jeweils senkrecht zu den zugeordneten Schenkelabschnitten und/oder Endabschnitten angeordnet sind. Bevorzugt weist das L-Profil im Querschnitt einen axialsymmetrischen Aufbau auf, wobei die Symmetrieachse als Winkelhalbierende zwischen den beiden Schenkelabschnitten ausgebildet ist. Weiter bevorzugt sind auch die ersten, zweiten, dritten, vierten, fünften und/oder sechsten Durchgangsöffnungen ebenfalls axialsymmetrisch verteilt.

In einer fertigungstechnisch vorteilhaften Ausführung ist das L-Profil einstückig ausgebildet und bevorzugt aus einem, insbesondere galvanisierten und/oder mit Aluminium und Zink beschichteten, Stahlblech und/oder Edelstahlblech vorzugsweise mit einer Dicke im Bereich von 2 mm gefertigt.

Es ist vorteilhaft, wenn die Länge des Schenkelabschnitts, Stirnseitenabschnitts und/oder Endabschnitts bzw. der - abschnitte ein ganzzahliges Vielfaches des festen Rastermaßes sind. Bei dieser Ausgestaltung werden die Außenabmessungen des L-Profils ebenfalls kompatibel zu dem bereits beim Abstand der Durchgangslöcher in Längserstreckung verwendeten Rastermaß.

Bei einer optionalen Weiterbildung der Erfindung ist bei dem L-Profil jeweils eines der ersten, zweiten, dritten, vierten, fünften und/oder sechsten Durchgangsöffnungen in einer Ebene, insbesondere einer Schnittebene, senkrecht zur Längserstreckung des L-Profils in einem Raster mit dem festen Rastermaß angeordnet. Diese Weiterbildung unterstreicht die erfinderische Idee, mit der Rahmenkonstruktion ein dreidimensionales Raster von Durchgangsöffnungen als mechanische Schnittstelle zu schaffen. Mit dieser Weiterbildung sind die Durchgangslöcher nicht nur in der Längserstreckung des L-Profils zueinander mit dem Rastermaß beabstandet, sondern auch senkrecht zu der Längserstreckung des L-Profils in einem entsprechenden Raster angeordnet. Bevorzugt bezieht sich der Abstand der Durchgangslöcher zueinander auf die Mittelpunkte der Öffnungen der jeweiligen Durchgangslöcher auf der Ober- und/oder Außenseite des L-Profils. Bevorzugt sind mindestens 50%, vorzugsweise mehr als 70 %, insbesondere mehr als 90% aller Durchgangsöffnungen in den Profilen in dem Raster angeordnet.

Bei einer Vorteilhaften Realisierung der Rahmenkonstruktion beträgt das feste Rastermaß 12,5 mm. Das Rastermaß deckt dabei das bei Schaltschränken übliche Rastermaß von 25 mm ab und berücksichtigt zudem, dass elektrische Funktionsmodule um ein halbes Rastermaß versetzt montiert werden können. Dieser Realisierung liegt die Überlegung zugrunde, dass verschiedene Herstellernormen bei der Anwendung des Rastermaßes existieren, die bei der Verwendung eines üblichen Rastermaßes von 25 mm nicht kompatibel sind, sondern zu Lücken zwischen den elektrischen Funktionsmodulen verschiedener Hersteller führen. Weiterhin bevorzugt sind die Durchgangsöffnungen als kreisrunde Öffnungen, insbesondere mit einem Durchmesser von ca. 5 mm, insbesondere 5,2 mm ausgebildet.

Bevorzugt wird als Verbindungselement zwischen zwei L-Profilen ein Montageblock verwendet, der vorzugsweise an mindestens zwei Seitenflächen L-förmige Anformungen aufweist, die bei der Montage von den L-Profilen zumindest abschnittsweise formschlüssig umgriffen werden. Eine praktischere Ausführungsform liegt vor, wenn an drei Seitenflächen eine L-förmige Anformüng vorgesehen ist, da der Montageblock als Eckelement einsetzbar ist. Bei einer Weiterbildung des Montageblocks sind die L-förmigen Anformungen unterbrochen, um eine insbesondere formschlüssige Aufnahmemöglichkeit für andere Profile, insbesondere für C-Profile zu bieten.

Für die Befestigung ist es zweckmäßig, wenn der Montageblock an mindestens zwei Seitenflächen, insbesondere drei Seitenflächen, jeweils ein insbesondere mittiges oder nahezu mittiges Gewinde zur Aufnahme einer Fixierschraube aufweisen. Die Tiefenerstreckung der Gewinde ist dabei vorzugsweise senkrecht zur jeweiligen Seitenfläche und/oder derart ausgerichtet, dass die Fixierschraube parallel zu der Längserstreckung eines zu fixierenden L-Profils geführt wird. Besonders vorteilhaft ist es, wenn auch die Abmessungen des Montageblocks auf das feste Rastermaß abgestimmt sind und/oder die Außenabmessungen des Montageblocks ohne Anformungen als ganzzahliges Vielfaches von dem Rastermaß ausgebildet sind.

Zudem kann die Rahmenkonstruktion ein Spannelement umfassen, welches an dem L-Profil befestigbar ist und mit dem Montageblock zur Fixierung von Montageblock und L-Profil zusammenwirkt. Insbesondere ist das Spannelement als das oben bereits erwähnte Stiftelement oder Befestigungselement ausgebildet oder stützt sich auf diesem ab.

Die erfindungsgemäße Rahmenkonstruktion kann optional weitere Rahmenprofile umfassen, wie z.B. ein C-Profil, ein U-Profil und/oder ein L-Profil. Gemeinsam ist diesen Profilen jedoch, dass diese Durchgangslöcher aufweisen, die in Längserstreckung der Profile in dem festen Rastermaß beabstandet sind und/oder die in einer Ebene senkrecht zu der Längserstreckung der Profile in einem Raster mit dem festen Rasermaß angeordnet sind.

Bei dem Aufbau der Rahmenkonstruktion sind die L-Profile bevorzugt als Eckpfeiler und/oder als Rahmenprofile des Decken- und/oder Bodenrahmens eingesetzt.

Das der Erfindung zugrunde liegende Problem wird auch mit einem Schaltschrank oder einem Bausatz für einen Schaltschrank mit einer Rahmenkonstruktion nach einem der Ansprüche 1 bis 15 gelöst. Der Bausatz umfasst - wie bereits erläutert - L-Profile und Verbindungselemente, insbesondere Montageblöcke, sowie optional die weiter oben beschriebenen C-Profile, U-Profile und/oder L-Profile.

Sowohl bei der Rahmenkonstruktion als auch bei dem Schaltschrank ergibt sich bei den meisten der genannten Ausführungsformen der zusätzliche Vorteil, dass deren Außenabmessungen (BxTxH) in dem festen Rastermaß gewählt werden können. Somit sind bei bevorzugten Ausführungsformen nicht nur die Lochmitten der Durchgangsöffnungen sondern z.B. auch die Außenecken des Schältschranks in dem Raster mit dem festen Rastermaß angeordnet. Die neben der Rasterbedingung freie Wahl der Außenabmessungen wird dadurch erreicht, dass die Profile nach dem Ablängen bereits einbaufertig sind, Insbesondere entfällt die Notwendigkeit zusätzliche mechanische Schnittstellen, z.B. durch Umformüng, für die Verbindung mit den Montageblöcken einzubringen.

Weitere Merkmale, Einzelheiten, Vorteile, Kombinationen und Wirkungen auf der Basis der Erfindung sind aus den nachfolgenden Ausführungsbeispielen zu entnehmen. Es zeigen:
- Fig. 1: ein erstes Ausführungsbeispiel einer erfindungsgemäßen Rahmenkonstruktion,
- Fig. 2a,b,c: Detailansichten der Rahmenkonstruktion in Figur 1,
- Fig. 3: ein L-Profil in Figur 1 in Draufsicht und Schnittdarstellung,
- Fig. 4: einen Eckbereich der Rahmenkonstruktion in Figur 1,
- Fig. 5: einen Montageblock aus dem Eckbereich in Figur 4,
- Fig. 6: eine Spannplatte aus dem Eckbereich in Figur 4,
- Fig. 7: ein C-Profil in Figur 1 in Draufsicht und Schnittdarstellung,
- Fig. 8: ein U-Profil in Figur 1 in Draufsicht und Schnittdarstellung,
- Fig. 9: ein zweites Ausführungsbeispiel einer erfindungsgemäßen Rahmenkonstruktion,
- Fig. 10: die Rahmenkonstruktion in Figur 9 in Draufsicht mit montierter Sicherungslastschaltleiste einer ersten Ausführungsform,
- Fig. 11: die Rahmenkonstruktion in Figur 9 in Draufsicht mit montierter Sicherungslastschaltleiste einer zweiten Ausführungsform.
- Fig. 12: einen alternativen Montageblock z.B. für die Eckbereiche in Figur 4,
- Fig. 13: den alternativen Montageblock in Figur im eingebauten Zustand.

Gleiche Bezugszeichen in den Figuren bezeichnen gleiche oder entsprechende Teile.

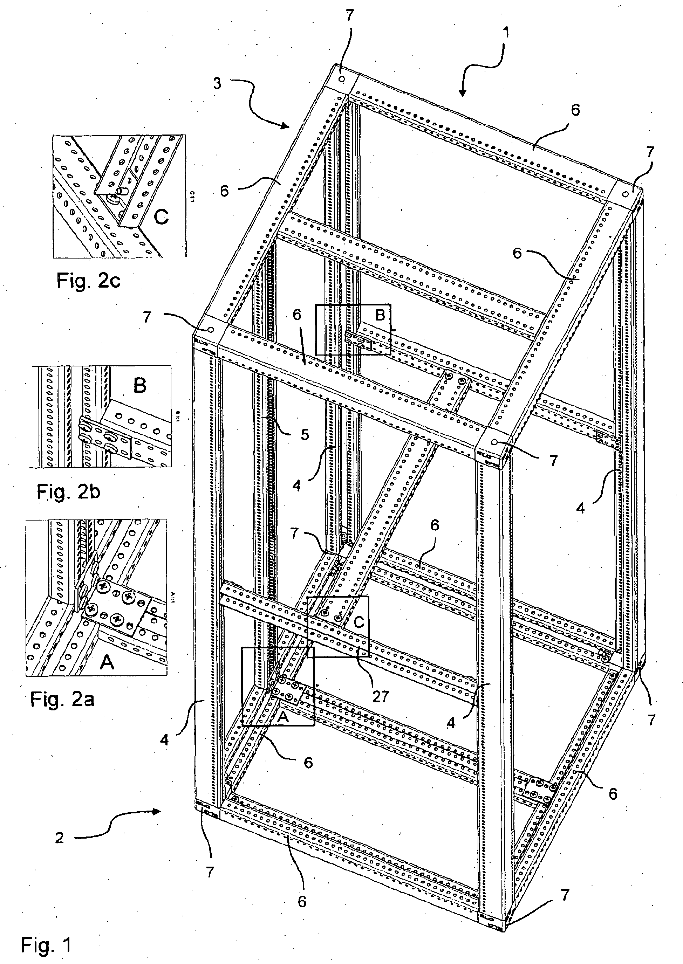

Die Figur 1 zeigt ein erstes Ausführungsbeispiel für eine Rahmenkonstruktion 1 eines Schaltschranks mit den Abmessungen (B x T x H) von 600 mm x 600 mm x 2000 mm in schematischer dreidimensionaler Ansicht schräg von oben.

Die quaderförmige Rahmenkonstruktion 1 weist einen Bodenrahmen 2 und einen Deckenrahmen 3 auf, die über vier Eckpfeiler 4 und einen Zwischenpfeiler 5 miteinander verbunden sind.

Der Bodenrahmen 2 bzw. der Deckenrahmen 3 ist jeweils durch vier Verbindungsprofile 6 gebildet, die über Montageblöcke 7 derart verbunden sind, dass die vier Verbindungsprofile 6 des Bodenrahmens 2 bzw. des Deckenrahmens 3 ein Rechteck aufspannen. In den Ecken des Rechtecks sind die Montageblöcke 7 angeordnet, wobei die Montageblöcke 7 des Bodenrahmens 2 über die Eckpfeiler 4 mit den Montageblöcken 7 des Deckenrahmens 3 verbunden sind.

Sowohl die Verbindungsprofile 6 von Bodenrahmen 2 und Deckenrahmen 3 als auch die Eckpfeiler 4 sind als baugleiche L-Profile ausgebildet. Somit können die Verbindungsprofile 6 und die Eckpfeiler 4 prinzipiell aus dem gleichen L-Profil-Halbzeug abgelängt werden.

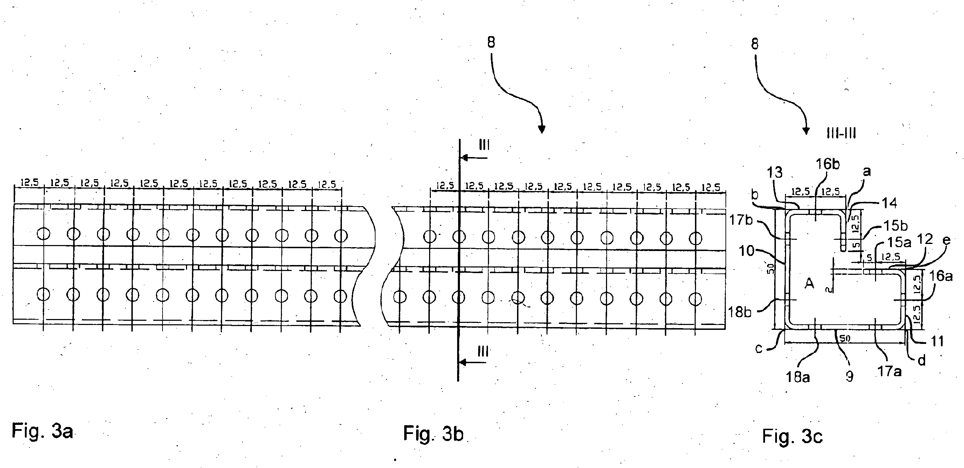

Die Figur 3 zeigt ein derartiges L-Profil 8 wie es als Verbindungsprofil 6 und/oder Eckpfeiler 4 in der Rahmenkonstruktion in Figur 1 verwendet wird auf der linken Seite in schematischer Draufsicht und auf der rechten Seite in einer schematischen Schnittdarstellung, in einer Schnittebene senkrecht zu der Längserstreckung des L-Profils 8, wie z.B. entlang der Schnittebene III-III. Das L-Profil 8 ist als einstückiges, gebogenes Stahlprofil ausgebildet. Wie anhand der Schnittdarstellung am besten erkennbar ist, weist das L-Profil 8 einen ersten und einen zweiten Schenkelabschnitt 9 bzw. 10 auf, die senkrecht zueinander L-förmig angeordnet sind und gemeinsam einen Innensektor A umschließen oder begrenzen.

An den ersten Schenkelabschnitt 9 schließt sich ein erster Stirnseitenabschnitt 11 an, der ausgehend von der Längserstreckung des ersten Schenkelabschnitts 9 in Richtung des zweiten Schenkelabschnitts 10 rechtwinklig abgewinkelt ist und parallel, insbesondere abschnittsweise deckungsgleich mit diesem verläuft. An den Stirnseitenabschnitt 11 schließt sich ein erster Endabschnitt 12 an, der ausgehend von der Längserstreckung des ersten Stirnseitenabschnitts 11 in Richtung des ersten Schenkelbschnitts 9 rechtwinklig abgewinkelt ist und zu diesem parallel und insbesondere abschnittsweise deckungsgleich verläuft. Zusammen bilden erster Schenkelabschnitt 9, erster Stirnseitenabschnitt 11 und erster Endabschnitt 12 eine U-Form.

An den zweiten Schenkelabschnitt 10 schließt sich in analoger Weise ein zweiter Stirnseitenabschnitt 13 und ein zweiter Endabschnitt 14 an, so dass das L-Profil 8 in der Schnittdarstellung axialsymmetrisch zu einer Symmetrieachse ausgebildet ist, die in der Schnittebene als Winkelhalbierende zwischen dem ersten und dem zweiten Schenkelabschnitt 9 und 10 verläuft.

Die Längen der verschiedenen Abschnitte 9 bis 14 des L-Profils 8 sind so ausgebildet, dass die Eckpunkte (oder Eckbereiche) a,b,c,d,e zwischen den Abschnitten 9 bis 14 in einem gleichmäßigen Raster mit einem Rastermaß von 12,5 mm angeordnet sind. Insbesondere weisen alle Abschnitte 9, 10, 11 und 13, die als Zwischenabschnitte ausgebildet sind, als Länge ein ganzzahlig Vielfaches des Rastermaßes auf. Die Stirnseitenabschnitte 11 und 13 sind halb so lang wie die Schenkelabschnitte 9 und 10 ausgebildet.

In den Endabschnitten 12 und 14, in den Stirnseitenabschnitten 11 und 13 sind jeweils kreisrunde Durchgangslöcher 15a,b bzw. 16a,b mit einem Durchmesser von 5,1 mm eingebracht. Optional sind gegenüberliegend und/oder fluchtend zu den Durchgangslöchern 15a,b in den Endabschnitten 12 und 14 weitere Durchgangslöcher 17a,b in dem ersten bzw. zweiten Schenkelabschnitt 9 bzw. 10 platziert. Weiter optional sind gegenüberliegend zu den Durchgangslöchern 16a in dem ersten Stirnseitenabschnitt 11 Durchgangslöcher 18b in dem zweiten Schenkelabschnitt 10 sowie gegenüberliegend und/oder fluchtend zu den Durchgangslöchern 16b in dem zweiten Stirnseitenabschnitt 13 Durchgangslöcher 18a in dem ersten Schenkelabschnitt 9 eingebracht.

Wie am besten aus der Schnittdarstellung zu entnehmen ist, liegt jeweils ein Durchgangsloch 15a,b bis 18a,b in einer gemeinsamen Schnittebene. Die Durchgangslöcher 15a,b bis 18a,b, insbesondere deren Lochmitten an der Außenseite des Profils 8, einer Schnittebene sind dabei in einem Raster mit dem Rastermaß 12,5 mm angeordnet und zwar insbesondere in dem gleichen Raster wie die Eckpunkte a,b,c,d,e. Wie aus der Draufsicht auf der linken Seite der Figur 3 zu entnehmen ist, sind Ebenen mit jeweils einer Gruppe der Durchgangslöcher 15a,b bis 18a,b äquidistant mit einem Abstand von 12,5 mm in Längserstreckung des L-Profils 8 angeordnet. Auf diese Weise ergibt sich nicht nur ein zweidimensionales Raster in der Schnittebene, sondern die Durchgangsöffnungen und/oder die Eckpunkte sind in einem dreidimensionalen Raster mit dem Rastermaß von 12,5 mm angeordnet. Als eine bevorzugte Ausführungsalternative ist ein L-Profil 8 zu sehen, welches in jeder Ebene ein Durchgangsloch 15a,b bis 17a,b aufweist und nur in der ersten und in der letzten Ebene ein Durchgangsloch 18a,b besitzt.

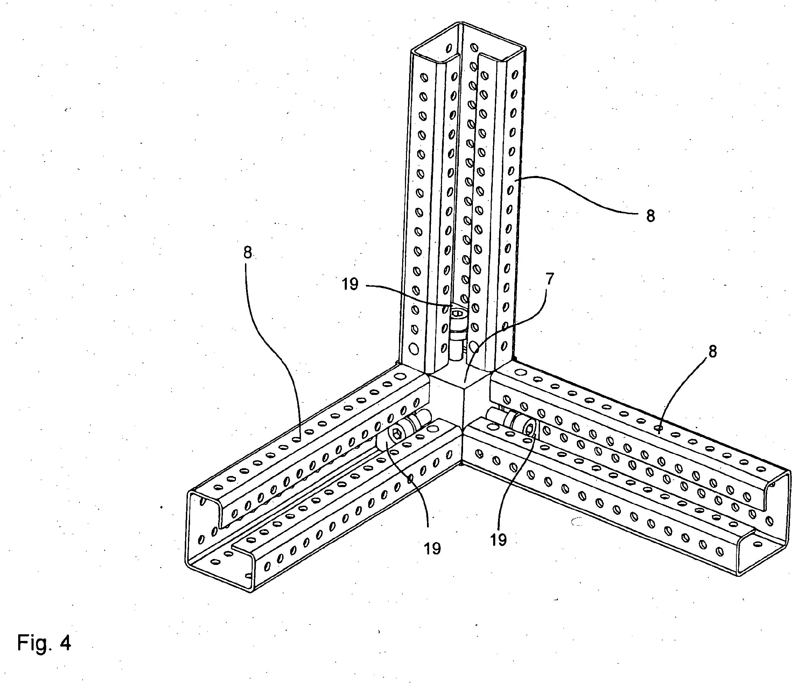

Die Figur 4 zeigt eine Eckverbindung von drei L-Profilen 8 mit einem Montageblock 7, wie sie beispielsweise in der Rahmenkonstruktion 1 eingesetzt ist. Die drei L-Profile 8 sind rechtwinklig zueinander angeordnet, der Eckbereich der Eckverbindung wird durch den Montageblock 7 realisiert und zwar derart, dass die Außenseiten des ersten bzw. zweiten Schenkelabschnitts der L-Profile 8 eine gemeinsame Ebene mit der zugeordneten Außenseite des Montageblocks 7 bilden.

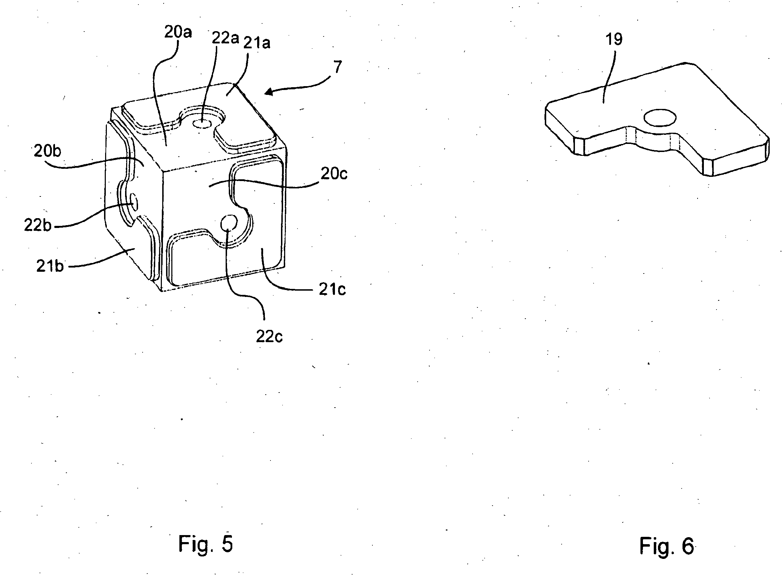

Für ein besseres Verständnis des Aufbaus der Eckverbindung wird auf die Figuren 5 und 6 verwiesen, die den Montageblock 7 bzw. eine Spannplatte 19 zeigt. Der Montageblock 7 ist ein Würfel mit einer Kantenlänge, die ein ganzzahliges Vielfaches des Rastermaßes ist und in diesem Beispiel 50 mm beträgt. An drei Kontaktseiten 20a,b,c des Würfels sind L-förmige Anformungen 21a,b,c vorgesehen, die in den Abmessungen an das L-förmige Profil 8 angepasst sind, so dass die Anformungen 21a,b,c als Montagehilfe und Formschluss wirken. Etwas außerhalb der Mitte jeder Kontaktseite 20a,b,c ist eine Gewindebohrung 22a,b,c zur Aufnahme von Montageschrauben eingebracht. Die Tiefenerstreckung der Gewindebohrungen 22a,b,c ist senkrecht zu den jeweiligen Kontaktseiten 20a,b,c und/oder zu den gegenüberliegenden Außenseiten ausgerichtet. Die abgewandten und somit nicht gezeigten drei Außenseiten des Montageblocks 7 sind im wesentlichen plan ausgeführt.

Die Spannplatte 19 in Figur 6 ist als L-förmige Platte mit einer Durchgangsöffnung ausgebildet. Bei der Montage wie in Figur 4 gezeigt wird in jedes L-Profil 8 eine Spannplatte 19 eingeführt und mittels eines nicht gezeigten Stiftes o.ä. gegen ein Verschieben in Richtung des Montageblocks 7 formschlüssig gesichert. Statt einem Stift kann auch eine Schraube, z.B. mit einer Gewindelänge von 25 mm eingesetzt werden. Die Montageschrauben werden durch die Durchgangsöffnung der Spannplatte 19 geführt und in die Gewindebohrungen 22a,b,c eingedreht, wodurch die Spannplatten 19 und somit die jeweiligen L-Profile 8 gegen den Montageblock 7 gezogen und schließlich fixiert werden.

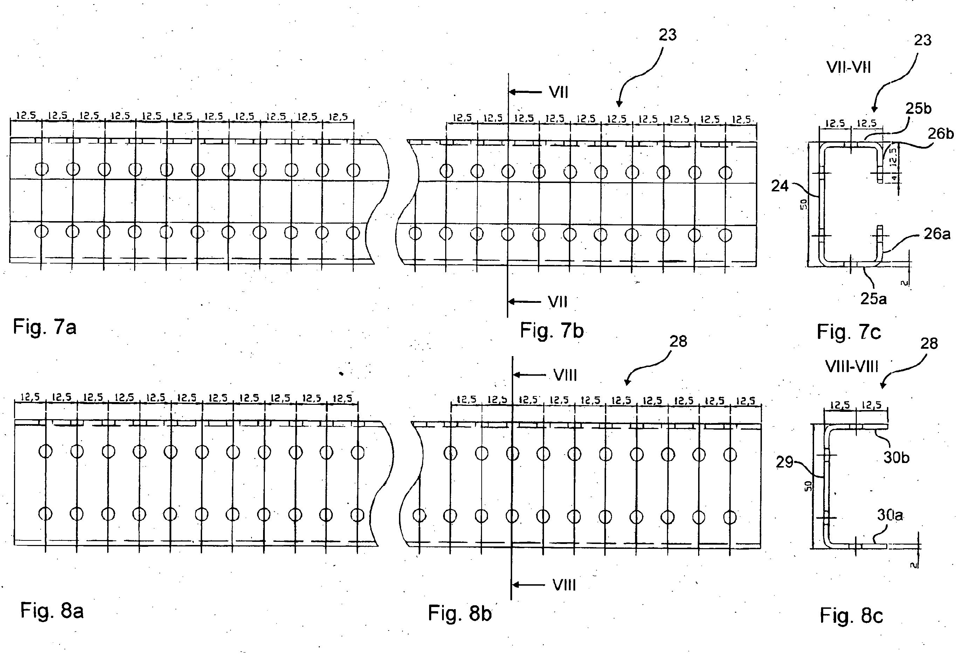

In der Figur 1 ist zu erkennen, dass das gesamte Außengerüst der Rahmenkonstruktion 1, insbesondere jeder Kantenabschnitt, aus den beschriebenen L-förmigen Profilen 8 aufgebaut ist. Die Zwischenstrebe 5 ist dagegen als ein in der Figur 7 gezeigtes C-Profil 23 realisiert.

In der Figur 7 ist das C-Profil 23 in der gleichen Darstellung gezeigt, wie das L-Profil 8 in Figur 3. Die Schnittdarstellung entlang der Schnittlinie VII-VII offenbart, dass das C-Profil 23 einen Basisabschnitt 24 aufweist, an den sich auf beiden Seiten jeweils ein Stirnseitenabschnitt 25a bzw. b um im weiteren Verlauf jeweils ein Endabschnitt 26a bzw. b anschließt, wobei diese Abschnitte analog zu den Abschnitten 11 bis 14 des L-Profils 8 rechtwinklig zueinander angeordnet und/oder ausgebildet sind. Insbesondere weist auch das C-Profil 23 Durchgangsöffnungen auf, die in einem Raster mit dem Rastermaß 12,5 mm und/oder Eckpunkte oder -bereiche, die in dem gleichen Raster angeordnet sind. Die Durchgangsöffnungen sind analog wie bei dem L-Profil entlang der Längserstreckung des C-Profils 23 in Ebenen geordnet, die mit dem Rastermaß 12,5 mm voneinander beabstandet sind. Das C-Profil 23 ergänzt somit einen Bausatz bestehend aus L-Profilen 8 und Verbindungselementen, insbesondere Montageblöcke 7, um eine optionale Komponente, durch die das dreidimensionale Raster erweiterbar ist.

In der Figur 1 ist an der Frontseite der Rahmenkonstruktion eine Zwischenstrebe 27 gezeigt, die aus einem U-Profil 28 besteht, welches in Figur 8 gezeigt ist. Das U-Profil 28 weist einen Basisabschnitt 29 auf, an den sich rechtwinklig auf beiden Seiten ein Endabschnitt 30a bzw. b anschließt. Analog wie bei dem L-Profil 8 und dem C-Profil 23 weist das U-Profil 28 Durchgangslöcher und/oder Eckpunkte oder -bereiche auf, die in dem Raster mit dem Rastermaß 12,5 mm angeordnet sind. Auch die Ebenen, in denen die Durchgangslöcher organisiert sind, sind voneinander durch das Rastermaß beabstandet. Somit bildet das U-Profil 28 eine weitere optionale Komponente in dem oben beschriebenen Bausatz.

Die Figuren 2a,b,c zeigen Ausschnittsvergrößerungen der Ansichten A,B und Ansicht C von unten und illustrieren die Verbindung verschiedener Profile mit Hilfe von Verbindungsplatten oder -winkeln als weitere Verbindungselemente. Vorzugsweise sind die Durchgangsöffnungen in diesen Verbindungselementen ebenfalls in dem Raster mit dem Rastermaß 12,5 mm ausgeführt.

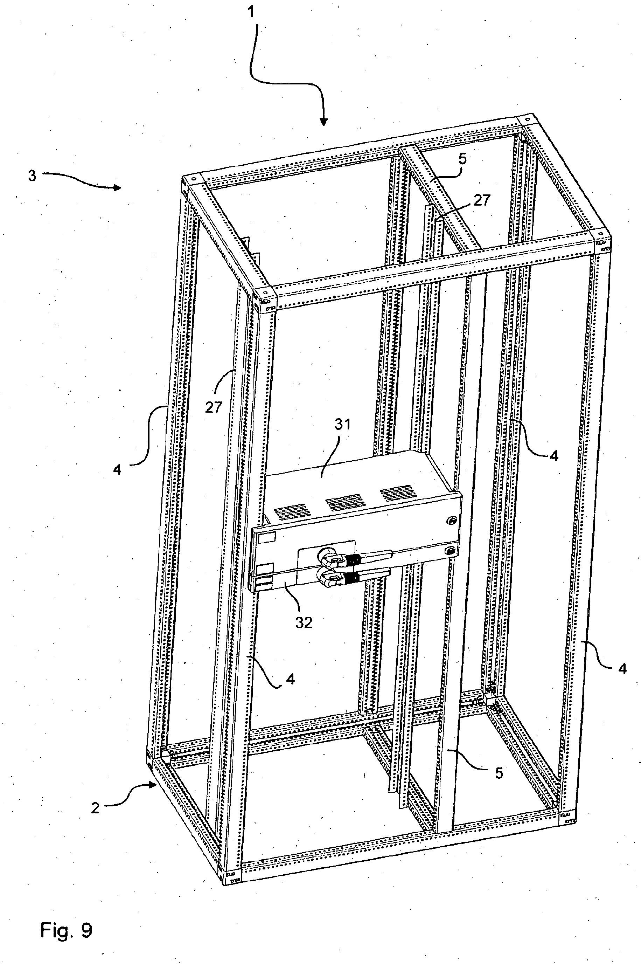

Die Figur 9 zeigt ein zweites Ausführungsbeispiel einer Rahmenkonstruktion 1 mit den Abmessungen (B x T x H) von 1000 mm x 600 mm x 2000 mm, die die gleichen Komponenten des Bausatzes wie die Rahmenkonstruktion 1 in Figur 1, insbesondere in anderen Längen nutzt und illustriert damit die vielfachen Einsatzmöglichkeiten dieser Komponenten. Als Beispiel sind in der Rahmenkonstruktion 1 zwei Sicherungsschaltleisten 31 und 32 montiert. Der Darstellung ist zu entnehmen, dass durch die verschiedenen Komponenten des Bausatzes eine Rahmenkonstruktion 1 geschaffen ist, die ein durchgängiges, also ein sich über mehrere Komponenten erstreckendes, Raster mit festen Rastermaß von Durchgangslöchern als mechanische Schnittstellen bereitstellt. Durch dieses drei-dimensionale Raster von Durchgangslöchern ist es möglich, die Sicherungsschaltleisten 31 und 32 ohne zusätzliche und/oder rahmenkonstruktionsspezifische Adapterelemente zu montieren.

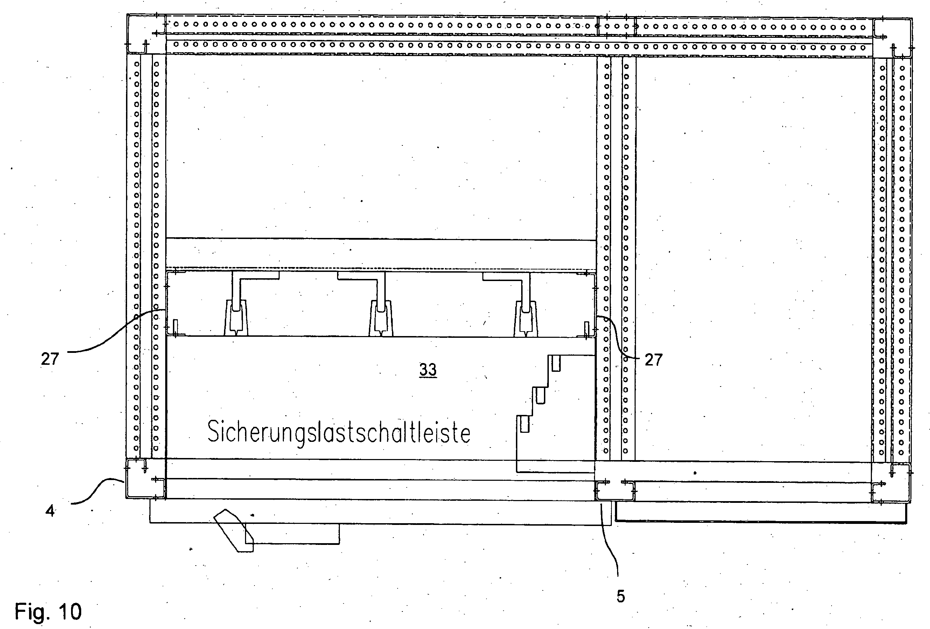

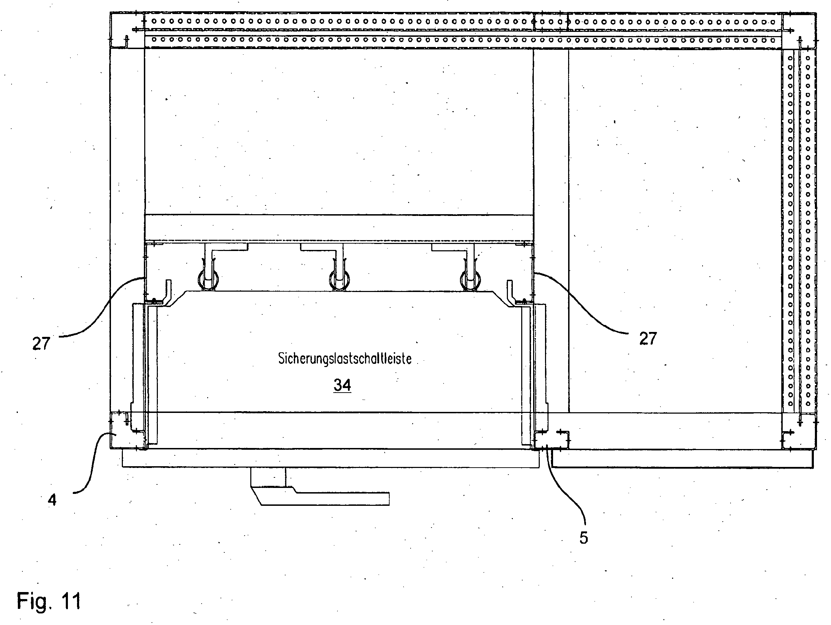

Die Figuren 10 und 11 zeigen jeweils eine Rahmenkonstruktion ähnlich oder identisch zu der Rahmenkonstruktion 1 in Figur 9 in Draufsicht von oben. Die Figur 10 illustriert den Einbau einer Sicherungsschaltleiste 33 der Serie ABB-Slimline, die an dem Eckpfeiler 5 (aus dem L-Profil 8), dem Zwischenpfeiler 4 (aus dem C-Profil 23) sowie an den beiden Zwischenstreben 27 (aus dem U-Profil ) jeweils durch eine Schraubverbindung adapterfrei befestigt ist. Die Figur 11 zeigt die gleiche Rahmenkonstruktion wie in Figur 10, wobei eine Sicherungslastschaltleiste 34 der Fa. "Jean Müller" montiert ist. Auch die Montage dieser Sicherungslastschaltleiste 34 ist ohne zusätzliches Adaptermaterial möglich.

Die Dimensionen, insbesondere die angegebenen Längen und Abstände des Ausführungsbeispiels betreffen besonders vorteilhafte Ausführungsformen, wobei die Möglichkeit andere Dimensionen zu verwenden auch Bestandteil der vorliegenden Offenbarung ist.

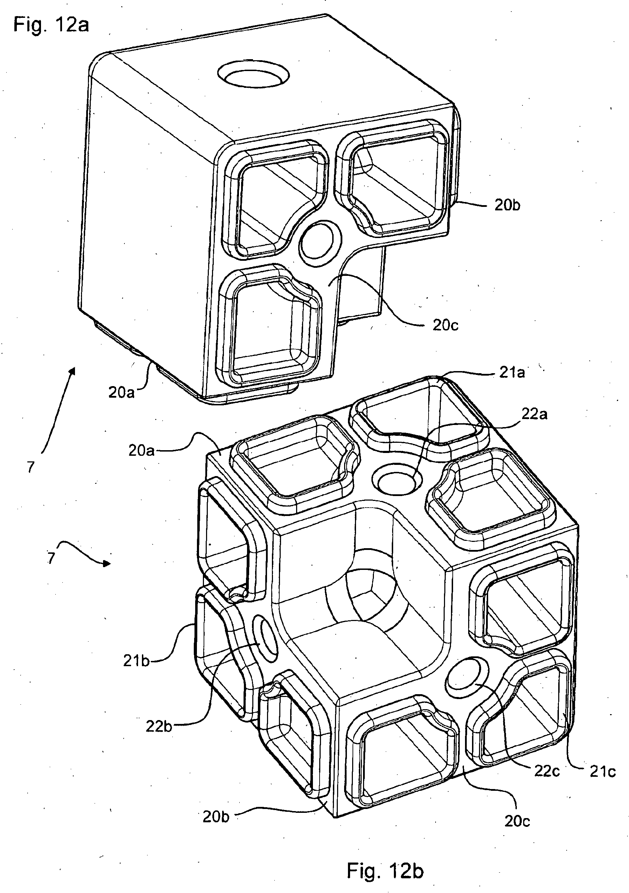

Die Figur 12 zeigt einen alternativen Montageblock 7 mit einer Kantenlänge von 50 mm in zwei verschiedenen dreidimensionalen schematischen Ansichten. Im Gegensatz zu dem Montageblock 7 in der Figur 5 ist der Montageblock 7. in Figur zur Herstellung durch ein Aluminiumdruckgussverfahren ausgebildet. Die funktionalen Elemente wie die Kontaktseiten 20 a,b,c, die L-förmigen Anformungen 21 a,b,c sowie die Gewindeaufnahmen 22 a,b,c sind in dem Montageblock 7 in Figur 12 ebenfalls vorhanden, jedoch in einer Form, die an das Herstellungsverfahren, z.B. durch die Verwendung von Entformschrägen, angepasst ist. Im Gegensatz zu dem Montageblock 7 in Figur 5 weist der Montageblock 7 in Figur 12 aber L-förmige Anformungen 21 a,b,c auf, die zweifach durchbrochen sind. Die Durchbrechungen sind bei der gezeigten Ausführung so realisiert, dass die L-förmigen Anformungen 21a,b,c jeweils durch drei aus den Seitenflächen der Kontaktseiten 20a,b,c herausragende insbesondere rechteckige Teilbereiche gebildet sind. Bei anders aufgebauten Montageblöcken 7 kann die zweifache Durchbrechung auch abweichend realisiert sein.

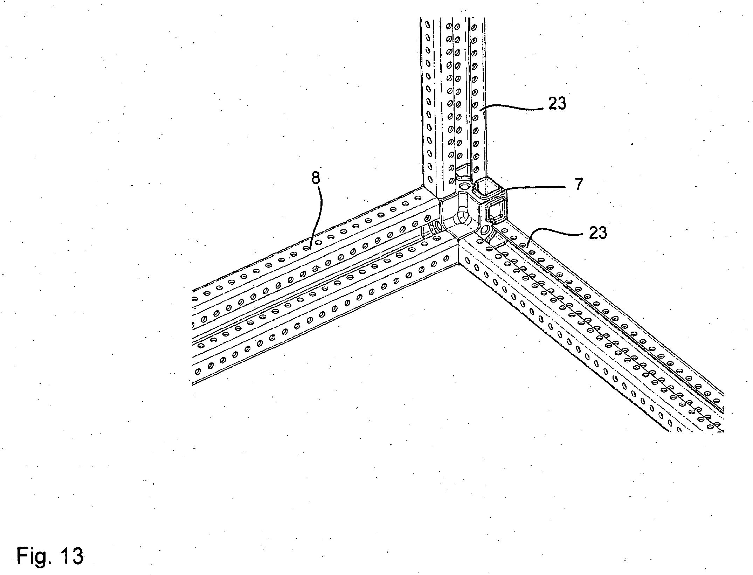

Wie am Besten in der Figur 13 zu erkennen ist, erlaubt diese zweifache Durchbrechung, dass der Montageblock 7 auch C-Profile 23 aufnehmen kann, wobei die C-Profile 23 zwei von den drei rechteckigen Teilbereichen formschlüssig umgreifen. Der Montageblock 7 ist somit als Verbindungselement zwischen L-Profilen und C-Profilen 23 ausgebildet.

## Patentansprüche

1. Rahmenkonstruktion (1) für einen Schaltschrank
mit Rahmenprofilen (4, 6) und Verbindungselementen (7), wobei die Rahmenprofile (4, 6) über die Verbindungselemente (7) zur Bildung der Rahmenkonstruktion miteinander verbunden und/oder verbindbar sind;
wobei mindestens eines der Rahmenprofile (4, 6) im Querschnitt als L-Profil (8) mit einem ersten und einem dazu L-förmig angeordneten, zweiten Schenkelabschnitt (9, 10) ausgebildet ist und die Schenkelabschnitte (9, 10) zusammen einen Innensektor (A) begrenzen,
wobei der erste Schenkelabschnitt (9) in einen zu dem Innensektor hin abgewinkelten ersten Stirnseitenabschnitt (11) übergeht und der erste Stirnseitenabschnitt (11) in einen zu dem ersten Schenkelabschnitt (9) hin abgewinkelten ersten Endabschnitt (12) übergeht und
wobei der zweite Schenkelabschnitt (10) in einen zu dem Innensektor hin abgewinkelten zweiten Stirnseitenabschnitt (13) übergeht, und der zweite Stirnseitenabschnitt (13) in einen zu dem zweiten Schenkelabschnitt (10) hin abgewinkelten zweiten Endabschnitt (3, 4) übergeht,
wobei an dem ersten Stirnseitenabschnitt (11) und in Längserstreckung des LProfils (8) erste Durchgangsöffnungen (16a) in einem festen Rastermaß angeordnet sind,
wobei an dem ersten Endabschnitt (12) und in Längserstreckung des L-Profils (8) zweite Durchgangsöffnungen (15a) in dem festen Rastermaß angeordnet sind,
wobei mindestens eines der Verbindungselemente als ein Montageblock (7) zum Verbinden von zwei und/oder drei der L-Profile (8) ausgebildet ist,
mit einem Spannelement (19), welches an dem L-Profil (8) formschlüssig befestigbar ist und mit dem Montageblock (7) zusammenwirkt, so dass das L-Profil (8) mit dem Montageblock (7) kraft- und formschlüssig verbunden ist,
wobei das Spannelement (19) als eine L-förmige Spannplatte (19) mit einer Durchgangs-Öffnung ausgebildet ist, und
wobei sich die L-förmige Spannplatte (19) auf einem Befestigungselement, insbesondere einem Stift oder einer Schraube abstützt, welches in eine Durchgangsöffnung (15a, 16a) des L-Profils (8) eingreift.

2. Rahmenkonstruktion nach Anspruch, **dadurch gekennzeichnet, dass** die LProfile als Eckpfeiler und als Rahmenprofile bzw. Verbindungsprofile eines Decken- und/oder Bodenrahmens ausgebildet sind, wobei die Verbindungsprofile und die Eckpfeiler aus dem gleichen L-Profil-Halbzeug abgelängt sind.

3. Rahmenkonstruktion nach Anspruch 2, **dadurch gekennzeichnet, dass** die Eckpfeiler und die Rahmenprofile unterschiedliche Längen aufweisen.

4. Rahmenkonstruktion nach einem der vorhergehenden Ansprüche, **dadurch gekennzeichnet, dass** der Montageblock für die Befestigung an mindestens zwei Seitenflächen, insbesondere drei Seitenflächen, jeweils ein insbesondere mittiges oder nahezu mittiges Gewinde zur Aufnahme einer Fixierschraube aufweist.

5. Rahmenkonstruktion nach einem der vorhergehenden Ansprüche, **dadurch gekennzeichnet, dass** der Montageblock an mindestens zwei Seitenflächen L-förmige-Anformungen aufweist, die bei der Montage von den L-Profilen zumindest abschnittsweise formschlüssig umgriffen werden.

6. Rahmenkonstruktion nach Anspruch 5, **dadurch gekennzeichnet, dass** die L-förmigen Anformungen unterbrochen sind, um eine formschlüssige Aufnahmemöglichkeit für andere Profile, insbesondere, für C-Profile, zu bieten.

7. Rahmenkonstruktion nach einem der vorhergehenden Ansprüche, **dadurch gekennzeichnet, dass** bei der Montage in jedes L-Profil (8) eine der Spannplatten (19) eingeführt ist und mittels eines Stiftes, Schraube o.ä. als Befestigungselement gegen ein Verschieben in Richtung des Montageblocks (7) formschlüssig gesichert ist.

8. Rahmenkonstruktion (1) nach einem der .vorhergehenden Ansprüche, **dadurch gekennzeichnet, dass** an dem zweiten Stirnseitenabschnitt (13) und/oder am zweiten Endabschnitt (14) dritte (16b) und/oder vierte (15b) Durchgangsöffnungen in Längserstreckung des-L-Profils (8) in dem festen Rastermaß angeordnet sind.

9. Rahmenkonstruktion (1) nach einem der vorhergehenden Ansprüche, **dadurch gekennzeichnet, dass** fünfte (17a,b) Durchgangsöffnungen in dem ersten bzw. zweiten Schenkelabschnitt (9,10) angeordnet sind, wobei die fünften (17a,b) Durchgangsöffnungen gegenüberliegend zu den zweiten (15a) bzw. zu den vierten (16a) Durchgangsöffnungen angeordnet sind.

10. Rahmenkonstruktion (1) nach einem der vorhergehenden Ansprüche, **dadurch gekennzeichnet, dass** sechste (18a,b) Durchgangsöffnungen in dem ersten bzw. zweiten Schenkelabschnitt (9,10) angeordnet sind, wobei die sechsten (18a,b) Durchgangsöffnungen gegenüberliegend zu den dritten (16b) bzw. zu den ersten (16a) Durchgangsöffnungen angeordnet sind.

11. Rahmenkonstruktion (1) nach einem der vorhergehenden Ansprüche, **dadurch gekennzeichnet, dass** der erste und zweite Schenkelabschnitt (9,10) miteinander verbunden und/oder rechtwinklig zueinander angeordnet ist.

12. Rahmenkonstruktion (1) nach einem der vorhergehenden Ansprüche, **dadurch gekennzeichnet, dass** die Schenkelabschnitte (9, 10) jeweils parallel zu den zugeordneten Endabschnitten (12, 14) und/oder die Stirnseitenabschnitte (11, 13) jeweils senkrecht zu den zugeordneten Schenkelabschnitten (9,10) und/oder Endabschnitten (12, 14) angeordnet sind.

13. Rahmenkonstruktion (1) nach einem der vorhergehenden Ansprüche, **dadurch gekennzeichnet, dass** das L-Profil (8) einstückig ausgebildet ist.

14. Rahmenkonstruktion (1) nach einem der vorhergehenden Ansprüche, **dadurch gekennzeichnet, dass** die Länge des Schenkelabschnitts (9,10), des Stirnseitenabschnitts (11, 13) und/oder Endabschnitts (12, 14) und/oder der -abschnitte ein ganzzahliges Vielfaches des festen-Rastermaßes sind.

15. Rahmenkonstruktion (1) nach einem der vorhergehenden Ansprüche, **dadurch gekennzeichnet, dass** jeweils eines der ersten, zweiten, dritten, vierten, fünften und/oder sechsten Durchgangsöffnungen in einer Ebene (III-III) senkrecht zur Längserstreckung des L-Profils in einem Raster mit dem festen Rastermaß angeordnet sind.

16. Rahmenkonstruktion (1) nach einem der vorhergehenden Ansprüche, **dadurch gekennzeichnet, dass** das feste Rastermaß 12,5 mm beträgt.

17. Rahmenkonstruktion (1) nach einem der vorhergehenden Ansprüche, **dadurch gekennzeichnet, dass** der Montageblock (7) an mindestens zwei Seitenflächen (20 a,b,c) L-förmige Anformungen (21 a,b,c) aufweist, die bei der Montage von den L-Profilen (8) zumindest abschnittsweise formschlüssig umgriffen werden.

18. Rahmenkonstruktion (1) nach einem der vorhergehenden Ansprüche, **dadurch gekennzeichnet, dass** der Montageblock (7) bei mindestens zwei Seitenflächen insbesondere mittige Gewindebohrungen (22a,b,c) aufweist, wobei die Tiefenerstreckung der Gewindebohrungen (22a,b,c) senkrecht oder im wesentlichen senkrecht zu den jeweiligen Seitenflächen (20a,b,c) ausgerichtet sind.

19. Rahmenkonstruktion (1) nach einem der vorhergehenden Ansprüche, **dadurch gekennzeichnet, dass** die Abmessungen des Montageblocks (7) ein ganzzahliges Vielfaches des festen Rastermaßes betragen.

20. Rahmenkonstruktion (1) nach einem der vorhergehenden Ansprüche, **gekennzeichnet durch** ein Spannelement (19), welches an dem L-Profil (8) formschlüssig befestigbar ist und mit dem Montageblock (7) zusammenwirkt, so dass das L-Profil (8) mit dem Montageblock kraft- und formschlüssig verbunden ist.

21. Rahmenkonstruktion (1) nach einem der vorhergehenden Ansprüche, **dadurch gekennzeichnet, dass** ein oder mehrere und/oder alle Eckpfeiler (4) und /oder ein oder mehrere und/oder alle Profile (6) zur Bildung eines Decken- und/oder Bodenrahmens (2, 3) als L-Profil (8) ausgebildet ist bzw. sind.

22. Schaltschrank oder Bausatz für einen Schaltschrank mit einer Rahmenkonstruktion (1) nach einem der vorhergehenden Ansprüche.

## Claims

1. A frame construction (1) for a switchgear cabinet
with frame profiles (4, 6) and connecting elements (7), wherein the frame profiles (4, 6) are connected and/or connectable via the connecting elements (7) so as to form the frame construction;
wherein at least one of the frame profiles (4, 6) is formed in cross-section as an L-profile (8) having a first and a second leg section (9, 10) arranged in an L-shape thereto, and the leg sections (9, 10) together confining an inner sector (A),
wherein the first leg section (9) merges into a first front-side section (11) which is angled towards the inner sector, and the first front-side section (11) merges into a first end section (12) which is angled towards the first leg section (9), and
wherein the second leg section (10) merges into a second front-side section (13) which is angled towards the inner sector, and the second front-side section (13) merges into a second end section (3, 4) which is angled towards the second leg section (10),
wherein in the first front-side section (11) and in longitudinal direction of the L-profile (8), there are arranged first through openings (16a) in a fixed spacing, wherein in the first end section (12) and in longitudinal direction of the L-profile (8), there are arranged second through openings (15a) in said fixed spacing,
wherein at least one of the connecting elements is formed as a mounting block (7) for connecting two and/or three of the L-profiles (8),
comprising a clamping element (19) that is adapted to be attached to the L-profile (8) in positive manner and cooperates with the mounting block (7) such that the L-profile (8) is connected to the mounting block (7) by frictional connection and positive connection,
wherein the clamping element (19) is formed as an L-shaped clamping plate (19) having a through opening, and
wherein the L-shaped clamping plate (19) is supported on a mounting element, in particular a pin or a screw, which engages in a through opening (15a, 16a) of the L-profile (8).

2. A frame construction according to claim 1,
**characterised in that** the L-profiles are formed as corner pillars and as frame profiles and connecting profiles of a ceiling and/or floor frame, respectively, wherein the connecting profiles and the corner pillars are cut to length from the same L-profile semi-finished material.

3. A frame construction according to claim 2,
**characterised in that** the corner pillars and the frame profiles are of different lengths.

4. A frame construction according to any of the preceding claims, **characterised in that** the mounting block, for attachment to at least two lateral surfaces, in particular three lateral surfaces, comprises an in particular central or almost central thread each for receiving a fixing screw.

5. A frame construction according to any of the preceding claims, **characterised in that** the mounting block, on at least two lateral surfaces thereof, comprises L-shaped moulded-on portions which, when mounted, are enclosed by the L-profiles in positive manner at least in sections.

6. A frame construction according to claim 5,
**characterised in that** the L-shaped moulded-on portions are interrupted so as to provide a possibility for receiving other profiles, in particular C-profiles, in positive manner.

7. A frame construction according to any of the preceding claims, **characterised in that**, during mounting, one of the clamping plates (19) is inserted into each L-profile (8) and secured in positive manner against displacement towards the mounting block (7) by means of a pin, screw or the like as mounting element.

8. A frame construction (1) according to any of the preceding claims,
**characterised in that**, in the second front-side section (13) and/or the second end section (14), there are arranged third (16b) and/or fourth (15b) through openings in the longitudinal direction of the L-profile (8) in said fixed spacing.

9. A frame construction (1) according to any of the preceding claims,
**characterised in that** fifth (17a,b) through openings are arranged in the first and second leg sections (9, 10), respectively, with the fifth (17a,b) through openings being arranged opposite to the second (15a) and fourth (16a) through openings, respectively.

10. A frame construction (1) according to any of the preceding claims,
**characterised in that** sixth (18a,b) through openings are arranged in the first and second leg sections (9, 10), respectively, with the sixth (18a,b) through openings being arranged opposite to the third (16b) and first (16a) through openings, respectively.

11. A frame construction (1) according to any of the preceding claims,
**characterised in that** the first and second leg sections (9, 10) are connected to each other and/or arranged at right angles to each other.

12. A frame construction (1) according to any of the preceding claims,
**characterised in that** the leg sections (9, 10) are each arranged in parallel to the associated end sections (12, 14), and/or the front-side sections (11, 13) are each arranged perpendicularly to the associated leg sections (9, 10) and/or end sections (12, 14).

13. A frame construction (1) according to any of the preceding claims,
**characterised in that** the L-profile (8) is formed as an integral piece.

14. A frame construction (1) according to any of the preceding claims,
**characterised in that** the lengths of the leg section (9, 10), of the front-side section (11, 13) and/or the end section (12, 14) and/or sections are an integral multiple of the fixed spacing.

15. A frame construction (1) according to any of the preceding claims,
**characterised in that** a respective one of the first, second, third, fourth, fifth and/or sixth through openings are arranged in a plane (III-III) perpendicular to the longitudinal direction of the L-profile (8) in a grid pattern with the fixed spacing.

16. A frame construction (1) according to any of the preceding claims,
**characterised in that** the fixed spacing is 12.5 mm.

17. A frame construction (1) according to any of the preceding claims,
**characterised in that** the mounting block (7), on at least two lateral surfaces (20a,b,c) thereof, comprises L-shaped moulded-on portions (21a,b,c) which, when mounted, are enclosed by the L-profiles (8) in positive manner at least in sections.

18. A frame construction (1) according to any of the preceding claims,
**characterised in that** the mounting block (7), in at least two lateral surfaces thereof, comprises in particular central threaded bores (22a,b,c), with the depth extension of the threaded bores (22a,b,c) having an orientation perpendicular or substantially perpendicular to the respective lateral surfaces (20a,b,c).

19. A frame construction (1) according to any of the preceding claims,
**characterised in that** the dimensions of the mounting block (7) are an integral multiple of the fixed spacing.

20. A frame construction (1) according to any of the preceding claims,
**characterised by** a clamping element (19) that is adapted to be attached to the L-profile (8) in positive manner and cooperates with the mounting block (7) such that the L-profile (8) is connected to the mounting block by frictional connection and positive connection.

21. A frame construction (1) according to any of the preceding claims,
**characterised in that** one or more and/or all corner pillars (4) and/or one or more and/or all profiles (6) is or are formed as L-profile (8) so as to form a ceiling and/or floor frame (2, 3).

22. A switchgear cabinet or construction kit for a switchgear cabinet comprising a frame construction (1) according to any of the preceding claims.

## Revendications

1. Structure de cadre (1) pour un coffret de commande
comprenant des profilés de cadre (4, 6) et des éléments de liaison (7), les profilés de cadre (4, 6) étant reliés et/ou pouvant être reliés les uns aux autres via les éléments de liaison (7) pour la formation de la structure de cadre ;
dans laquelle au moins un des profilés de cadre (4, 6) est réalisé en section transversale sous la forme d'un profilé en forme de L (8) comprenant un premier tronçon faisant office de branche en forme de L (9) et un deuxième tronçon faisant office de branche en forme de L (10) qui lui est raccordé, les tronçons faisant office de branches (9, 10) délimitant ensemble un secteur interne (A) ;
dans laquelle le premier tronçon faisant office de branche (9) se transforme en un premier tronçon frontal (11) formant un coude dirigé vers le secteur interne et le premier tronçon frontal (11) se transforme en un premier tronçon terminal (12) formant un coude dirigé vers le premier tronçon faisant office de branche (9) ;
dans laquelle le deuxième tronçon faisant office de branche (10) se transforme en un deuxième tronçon frontal (13) formant un coude dirigé vers le secteur interne et le deuxième tronçon frontal (13) se transforme en un deuxième tronçon terminal (3, 4) formant un coude dirigé vers le deuxième tronçon faisant office de branche (10) ;
dans laquelle des premières ouvertures de passage (16a) sont disposées, dans une dimension modulaire fixe, contre le premier tronçon frontal (11) et dans l'étendue longitudinale du profilé en forme de L (8) ;
dans laquelle des deuxièmes ouvertures de passage (15a) sont disposées, dans la dimension modulaire fixe, contre le premier tronçon terminal (12) et dans l'étendue longitudinale du profilé en forme de L (8) ;
dans laquelle au moins un des éléments de liaison est réalisé sous la forme d'un bloc de montage (7) pour la liaison de deux et/ou trois profilés en forme de L (8) ;
comprenant un élément de serrage (19) qui peut être fixé par complémentarité de forme contre le profilé en forme de L (8) et qui coopère avec le bloc de montage (7), de manière telle que le profilé en forme de L (8) est relié par friction et par complémentarité de forme au bloc de montage (7) ;
dans laquelle l'élément de serrage (19) est réalisé en forme de plaque de serrage en forme de L (19) comportant une ouverture de passage ; et
dans laquelle l'élément de serrage en forme de L (19) s'appuie sur un élément de fixation, en particulier sur une broche ou sur une vis qui vient s'insérer dans une ouverture de passage (15a, 16a) du profilé en forme de L (8).

2. Structure de cadre selon la revendication 1, **caractérisée en ce que** les profilés en forme de L sont réalisés en forme de montants d'angles et en forme de profilés de cadre, respectivement en forme de profilés de liaison d'un cadre de couvercle et/ou d'un cadre de base, les profilés de liaison et les montants d'angles étant découpés à partir du même produit semi-fini sous la forme d'un profilé en L.

3. Structure de cadre selon la revendication 2, **caractérisée en ce que** les montants d'angles et les profilés de cadre présentent des longueurs différentes.

4. Structure de cadre selon l'une quelconque des revendications précédentes, **caractérisée en ce que** le bloc de montage présente, pour la fixation à au moins deux surfaces latérales, en particulier à trois surfaces latérales, respectivement un filet de vis en particulier central ou approximativement central pour la réception d'une vis de fixation.

5. Structure de cadre selon l'une quelconque des revendications précédentes, **caractérisée en ce que** le bloc de montage présente, contre au moins deux surfaces latérales, des surmoulages en forme de L, qui, lors du montage des profilés en forme de L sont enserrés par complémentarité de forme au moins par tronçons.

6. Structure de cadre selon la revendication 5, **caractérisée en ce que** les surmoulages en forme de L sont interrompus pour offrir une possibilité de réception par complémentarité de forme pour d'autres profilés, en particulier pour des profilés en forme de C.

7. Structure de cadre selon l'une quelconque des revendications précédentes, **caractérisée en ce que**, lors du montage, on introduit dans chaque profilé en forme de L (8), une des plaques de serrage (19) et on la fixe par complémentarité de forme au moyen d'une tige, d'une vis ou analogue, à titre d'élément de fixation à l'encontre d'un déplacement dans la direction du bloc de montage (7).

8. Structure de cadre (1) selon l'une quelconque des revendications précédentes, **caractérisée en ce que** des troisièmes (16b) et/ou des quatrièmes (15b) ouvertures de passage sont disposées, sur l'étendue longitudinale du profilé en L (8), dans la dimension modulaire fixe, contre le deuxième tronçon frontal (13) et/ou contre le deuxième tronçon terminal (14).

9. Structure de cadre (1) selon l'une quelconque des revendications précédentes, **caractérisée en ce que** des cinquièmes (17a, b) ouvertures de passage sont disposées dans le premier, respectivement le deuxième tronçon faisant office de branche (9, 10), les cinquièmes (17a, b) ouvertures de passage étant disposées à l'opposé des deuxièmes (15a), respectivement des quatrièmes (16a) ouvertures de passage.

10. Structure de cadre (1) selon l'une quelconque des revendications précédentes, **caractérisée en ce que** des sixièmes (18a, b) ouvertures de passage sont disposées dans le premier, respectivement le deuxième tronçon faisant office de branche (9, 10), les sixièmes (18a, b) ouvertures de passage étant disposées à l'opposé des troisièmes (16b), respectivement des premières (16a) ouvertures de passage.

11. Structure de cadre (1) selon l'une quelconque des revendications précédentes, **caractérisée en ce que** le premier et le deuxième tronçon faisant office de branches (9, 10) sont reliés l'un à l'autre et/ou sont disposés en formant un angle l'un par rapport à l'autre.

12. Structure de cadre (1) selon l'une quelconque des revendications précédentes, **caractérisée en ce que** les tronçons faisant office de branches (9, 10) sont disposés respectivement parallèlement aux tronçons terminaux correspondants (12, 14) et/ou les tronçons frontaux (11, 13) sont disposés respectivement perpendiculairement aux tronçons correspondants faisant office de branches et/ou aux tronçons terminaux (12, 14).

13. Structure de cadre (1) selon l'une quelconque des revendications précédentes, **caractérisée en ce que** le profilé en L (8) est réalisé en une seule pièce.

14. Structure de cadre (1) selon l'une quelconque des revendications précédentes, **caractérisée en ce que** la longueur du et/ou des tronçons faisant office de branches (9, 10), du et/ou des tronçons frontaux (11, 13) et/ou du et/ou des tronçons terminaux (12, 14) représente un multiple entier de la dimension modulaire fixe.

15. Structure de cadre (1) selon l'une quelconque des revendications précédentes, **caractérisée en ce que**, respectivement une des premières, des deuxièmes, des troisièmes, des quatrièmes, des cinquièmes et/ou des sixièmes ouvertures de passage est disposée dans un plan (III-III), perpendiculairement par rapport à l'étendue longitudinale du profilé en L dans un module possédant la dimension modulaire fixe.

16. Structure de cadre (1) selon l'une quelconque des revendications précédentes, **caractérisée en ce que** la dimension modulaire fixe s'élève à 12,5 mm.

17. Structure de cadre (1) selon l'une quelconque des revendications précédentes, **caractérisée en ce que** le bloc de montage (7) présente, contre au moins deux surfaces latérales (20 a, b, c) des surmoulages en forme de L (21 a, b, c), qui, lors du montage des profilés en forme de L (8) sont enserrés par complémentarité de forme au moins par tronçons.

18. Structure de cadre (1) selon l'une quelconque des revendications précédentes, **caractérisée en ce que** le bloc de montage (7) présente, dans au moins deux surfaces latérales, des alésages taraudés, en particulier centraux (22 a, b, c), l'étendue en profondeur des alésages taraudés (22 a, b, c) étant orientée en direction perpendiculaire ou de manière essentiellement perpendiculaire aux surfaces latérales respectives (20 a, b, c).

19. Structure de cadre (1) selon l'une quelconque des revendications précédentes, **caractérisée en ce que** les dimensions du bloc de montage (7) représentent un multiple entier de la dimension modulaire fixe.

20. Structure de cadre (1) selon l'une quelconque des revendications précédentes, **caractérisée par** un élément de serrage (19) qui peut venir se fixer par complémentarité de forme au profilé en L (8) et qui coopère avec le bloc de montage (7), de manière telle que le profilé en forme de L (8) est relié par friction et par complémentarité de forme au bloc de montage.

21. Structure de cadre (1) selon l'une quelconque des revendications précédentes, **caractérisée en ce qu'**on réalise un ou plusieurs et/ou l'ensemble des montants d'angles (4) et/ou un ou plusieurs et/ou l'ensemble des profilés (6) pour la formation d'un cadre de couvercle et/ou d'un cadre de base (2, 3) en forme de profilés en L (8).

22. Coffret de commande ou module pour un coffret de commande comportant une structure de cadre (1) selon l'une quelconque des revendications précédentes.
